**Europäisches Patentamt**

**European Patent Office**

**Office européen des brevets**

(19)

(11) Numéro de publication : **0 432 064 A1**

# (12) DEMANDE DE BREVET EUROPEEN

(21) Numéro de dépôt : **90420522.6**

(22) Date de dépôt : **03.12.90**

(51) Int. Cl.$^5$ : **B62K 3/04**, B62K 17/00

---

(30) Priorité : **05.12.89 FR 8916427**

(43) Date de publication de la demande :
**12.06.91 Bulletin 91/24**

(84) Etats contractants désignés :
**AT BE CH DE ES FR GB IT LI NL SE**

(71) Demandeur : **SCOTT EUROPE SA**
**Chemin de Torry**
**CH-17000 Fribourg (CH)**

(72) Inventeur : **Remonato, André**
**13 route d'Issenheim**
**F-68360 Soultz (FR)**
Inventeur : **Mannheim, Serge**
**133 Faubourg des Vosges**
**F-68700 Cernay (FR)**

(74) Mandataire : **Gasquet, Denis**
**Les Pléiades no. 24C, Park Nord-Annecy**
**F-74370 Metz Tessy (FR)**

---

(54) **Perfectionnement pour véhicule à deux roues du type bicyclette.**

(57)    Bicyclette comprenant un ensemble avant de direction (11) articulé autour d'un axe (xx') sur un ensemble arrière porteur (12), ledit ensemble avant de direction (11) comprend à sa partie inférieure une roue avant (2), et à sa partie supérieure un guidon (a), tandis que ledit ensemble arrière porteur (12) comprend une selle (18) et une roue arrière caractérisée en ce que la roue arrière (1) est motrice et est plus petite que la roue avant (2).

FIG 1

EP 0 432 064 A1

## PERFECTIONNEMENT POUR VEHICULE A DEUX ROUES DU TYPE BICYCLETTE

L'invention est relative à un cycle à deux roues et concerne plus particulièrement des perfectionnements de ce type de véhicule.

La bicyclette est un moyen de locomotion bien connu depuis très longtemps et comprend un ensemble arrière porteur et un ensemble avant de direction.

L'ensemble arrière porteur étant constitué d'un cadre portant à sa partie supérieure une selle et à sa partie inférieure un pédalier actionnant une roue arrière par l'intermédiaire d'une chaîne.

L'ensemble avant de direction étant quant à lui constitué d'une colonne de direction articulée sur la partie avant du cadre et comprenant un guidon et une fourche retenant la roue avant.

Pour certains utilisateurs la bicyclette n'est qu'un simple moyen de locomotion utilitaire permettant d'aller d'un point à un autre de façon économique ou agréable. Pour d'autres utilisateurs et notamment les sportifs la bicyclette est considérée comme un outil sportif destiné au loisir ou à la compétition.

Si les utilisateurs qui utilisent la bicyclette comme un moyen pour aller d'un point à un autre ne sont pas exigeants quant aux qualités et performance de leur engin, il n'en est pas de même pour les utilisateurs sportifs qui sont de plus en plus exigeants.

Les bicyclettes de l'art antérieur et commercialisées actuellement présentent un certain nombre d'inconvénients. Celles-ci sont par exemple limitées en performance tels que couple moteur et accélération, car la longueur des manivelles ne peut excéder 175 millimètres sans toucher le sol lorsque l'engin s'incline de plus de 20° dans les virages. De plus la position de la selle bien que réglable ne peut être positionnée qu'en fonction d'un compromis ne donnant pas entièrement satisfaction.

Généralement la position adoptée par rapport à la roue arrière ne permet pas d'obtenir une force d'adhérence sur cette dernière qui est motrice. Ce qui a pour effet de rendre l'engin instable notamment lors du freinage et particulièrement dangereux dans les descentes.

La tige de selle introduite et serrée dans le cadre alourdit le cycle tout en augmentant l'inertie ainsi que le coût de fabrication du cadre.

Dans certaines compétitions on utilise comme roue motrice une roue lenticulaire à masse d'inertie incorporée, de grand diamètre. Ces roues ont comme inconvénient une très mauvaise accélération et étant donné leurs surfaces, elles sont fortement exposées au vent latéral.

De plus la triangulation adoptée pour les cadres traditionnels les rend flexibles au détriment des organes mécaniques fixés sur ce dernier, d'où il en résulte un mauvais rendement de la transmission et une fiabilité douteuse. Il arrive même qu'à grande vitesse et notamment dans les descentes, des vibrations apparaissent obligeant le cycliste à réduire sa vitesse.

La présente invention se propose de remédier aux inconvénients précités.

La bicyclette selon l'invention est telle que les forces musculaires de l'utilisateur sont mieux utilisées afin d'obtenir une moindre dépense énergétique pour un même travail.

Selon l'invention, la bicyclette comprenant un ensemble avant de direction articulé autour d'un axe sur un ensemble arrière porteur, ledit ensemble avant de direction comprend à sa partie inférieure une roue avant, et à sa partie supérieure un guidon, tandis que ledit ensemble arrière porteur comprend une selle et une roue arrière, et est caractérisée en ce que la roue arrière est motrice et est plus petite que la roue avant.

Selon une caractéristique complémentaire, le diamètre "D1" de la roue arrière est compris entre 60 et 97% du diamètre de la roue avant et est avantageusement égal à 95%.

Selon une autre caractéristique la bicyclette comprend des moyens d'entraînement constitués par un plateau manivelle solidaire de manivelles portant des pédales ledit plateau manivelle entraînant une chaîne continue et étant monté pivotant sur le cadre à son point inférieur médian.

Selon une autre disposition avantageuse, l'ensemble arrière porteur est constitué par un cadre ayant la forme générale d'un losange incliné vers l'arrière dont le segment supérieur constituant le tube supérieur de cadre s'étend vers l'arrière et vers le bas selon un angle aigu par rapport à l'horizontale, et la tige de selle constitue la liaison entre les points médians inférieur et supérieur du cadre, et comprend des moyens de réglage et de blocage de ladite tige de selle.

D'autres buts et avantages de l'invention apparaîtront au cours de la description qui va suivre, cette description étant toutefois donnée à titre indicatif, et non limitatif pour l'invention.

La figure 1 est une vue latérale d'une bicyclette selon l'invention.

La figure 2 est une vue en perspective arrière du cadre avec le tube de selle.

La figure 3 est une vue partielle représentant une variante.

La bicyclette selon l'invention est constituée par un ensemble avant de direction (11) articulé autour d'un axe (XX') sur un ensemble arrière porteur (12). Ledit ensemble avant de direction (11) comprend une colonne de direction (13) reliée à sa partie inférieure à une fourche avant (14) retenant la roue avant (12) et à sa partie supérieure à un guidon (9). L'ensemble arrière porteur (12) quant à lui comprend un cadre (4) dont la fourche arrière (15, 16) retient la roue motrice arrière (1) actionnée par des moyens d'entraînement (17) du type à chaîne. D'autre part, l'ensemble arrière porteur comprend une selle (18) retenue sur le cadre grâce à une tige de selle (5). Les moyens d'entraînement (17) sont bien connus en soi et ne seront pas décrits en détail. Rappelons seulement qu'ils sont constitués par un plateau manivelle (3) solidaire des manivelles (19), des pédales (11) et entraînant une chaîne continue (20).

Selon l'une des caractéristiques de l'invention la roue motrice arrière (1) est plus petite que la roue avant. Ainsi le diamètre "D1"de la roue motrice arrière (1) est inférieur au diamètre "D2" de la roue avant "2".

A titre d'exemple la roue arrière (1) peut avoir un diamètre extérieur "D1" compris entre 620 et 640 millimètres, tandis que la roue avant (2) plus grande peut avoir un diamètre extérieur "D2" compris entre 670 et 680 millimètres ; l'entraxe "L1" des roues pouvant être compris entre 960 et 1060 millimètres et l'entraxe "L2" entre le palier manivelle (3) et la roue arrière (1) pouvant être entre 360 et 380 millimètres et la garde au sol "H1" de 300 à 350 millimètres.

Selon l'invention le cadre tubulaire comprend une triangulation réduite, inclinée vers l'arrière et a la forme générale d'un losange (ABCD). Selon une caractéristique complémentaire, le cadre (4) comprend un tube supérieur (40) incliné vers l'arrière, s'étendant vers l'arrière (AR) et vers le bas (BA) selon un angle "a" par rapport à l'horizontale (h). Le tube s'étend du point avant (A) vers le point supérieur médian (B).

Selon une autre caractéristique de l'invention le tube central des bicyclettes traditionnelles, reliant les points médians (B et D) est remplacé, et constitué par la tige de selle (5) elle-même. Ainsi celle-ci constitue un long tube (50) rendu solidaire du cadre (4).

Selon une disposition avantageuse le cadre comprend des moyens de réglage, et de blocage (MB) en position de la tige de selle (50). Ces moyens sont constitués par deux brides (6, 7), une bride inférieure (7) située au point inférieur médian "D" du cadre et une bride supérieure (6) disposée au point supérieur médian "B" dudit cadre.

Le blocage de la tige de selle (50) dans les brides (6, 7) étant réalisé par des vis (8) permettant le serrage du tube dans leur logement correspondant des brides déformables dont la déformation élastique est obtenue par les fentes (60, 70). Le desserrage des vis (8) permet de déplacer la tige de selle vers le haut ou vers le bas, selon "f1" ou "f2" afin de régler et positionner correctement la selle (18) en fonction de la taille du cycliste.

L'axe YY' du tube de selle s'étend vers le haut (HA) et vers l'arrière (AR) pour former un angle "b" de 105° par rapport à l'horizontale (h). Cet angle permet de situer la selle automatiquement dans une position optimale d'une part par rapport au plateau manivelle en fonction de la dimension ou la taille du cycliste, permettant d'obtenir une force de pédalage nettement accrue, et d'autre part par rapport à la roue arrière (1), pour en améliorer l'adhérence.

La longue tige de selle (50) fait office de tube de liaison entre les points (B) et (D) du cadre (4) et permet l'utilisation de matières légères sur une plus grande distance, tels que fibres de carbone ou métaux composites, ce qui diminue le poids et réduit l'inertie du cycle.

L'utilisation d'une plus petite roue motrice à l'arrière, permet de réduire d'environ 50 millimètres la distance "L2" entre le palier--manivelles et l'axe de ladite roue arrière (1), et d'augmenter encore le poids adhérent sur la roue motrice. De plus l'inertie est ainsi réduite et permet d'obtenir de meilleures accélérations.

L'augmentation de la garde au sol du palier manivelles permet d'abaisser le centre de gravité et d'autoriser des rotations de manivelles en plein virage. L'inclinaison du cycle peut atteindre 45° et les temps morts dus aux virages sont supprimés.

En tant que roue motrice la petite roue arrière a un meilleur angle d'attaque au sol. Sa vitesse angulaire étant plus grande, celle-ci permet de corriger plus vite la trajectoire sans glisser.

A l'avant, la roue de grand diamètre non motrice, permet de mieux franchir les inégalités du parcours.

En tant que roue motrice lenticulaire avec masses d'inertie incorporées, la roue petit diamètre pour une vitesse donnée, restitue la même énergie cynétique, mais les accélérations sont supérieures de 20%, ainsi les démarrages et les relances sont notablement améliorés.

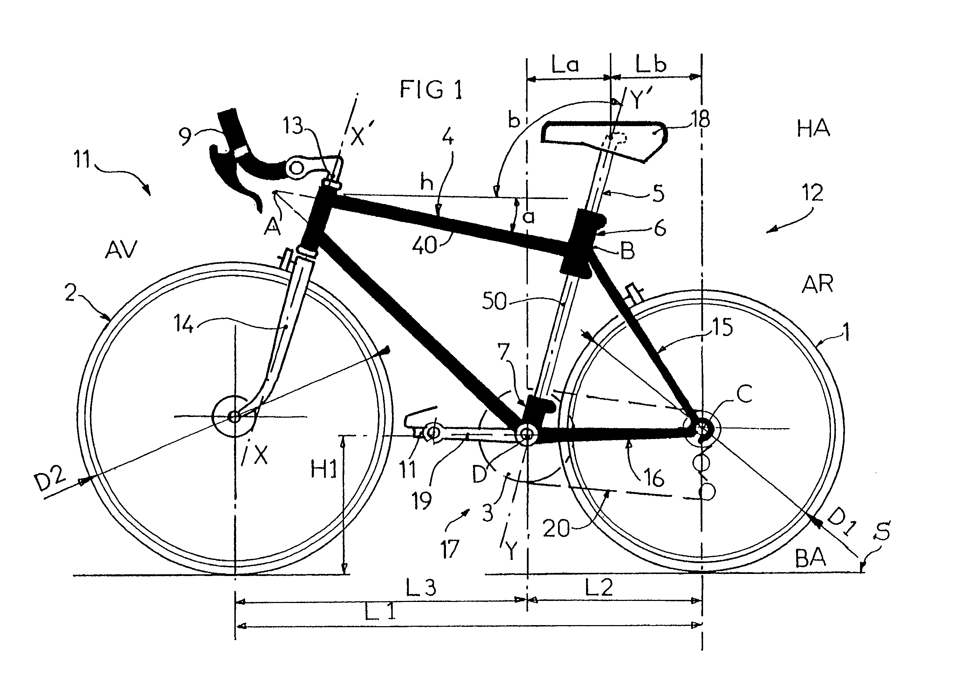

Par l'utilisation d'une plus petite roue motrice à l'arrière, la distance "L2" entre le palier manivelle (3) et la roue arrière (1) a pour effet d'augmenter le poids sur la roue motrice et en améliore ainsi son adhérence. L'inertie de la roue arrière est ainsi de ce fait réduite d'où un meilleur rendement lors des accélérations. De plus, cela permet une meilleure répartition des distances "La" et "Lb"(voir figure 1).

En effet, l'adhérence de la roue motrice est directement fonction de la distance horizontale "Lb" de la selle (18) à l'axe de la roue arrière tandis que la puissance est directement fonction de la distance horizontale "La" de la selle (18) à l'axe du pédalier. Or le cycle de l'invention permet à la fois d'avoir une bonne adhérence et une puissance maximale. De plus, avec un empattement "L1" identique à ce que l'on trouve sur des bicyclettes traditionnelles, il est possible grâce à la petite roue arrière d'avoir une distance "L2" réduite et une distance "L3" augmentée. Il est alors possible d'augmenter la longueur des manivelles (19) du pédalier et d'augmenter ainsi la puissance transmise. Un autre avantage lié à la réduction de la distance "L2" entre le pédalier et la roue arrière motrice est que la longueur de la chaîne se trouve ainsi réduite, et il en résulte une diminution du poids et des débattements du brin inférieur de chaîne (20).

Notons que la petite roue arrière (1) peut être à rayons discoïdes, et les pneumatiques de sections et profils divers. Elle peut avantageusement être lenticulaire du fait de son plus faible diamètre, sans compromettre sa rigidité.

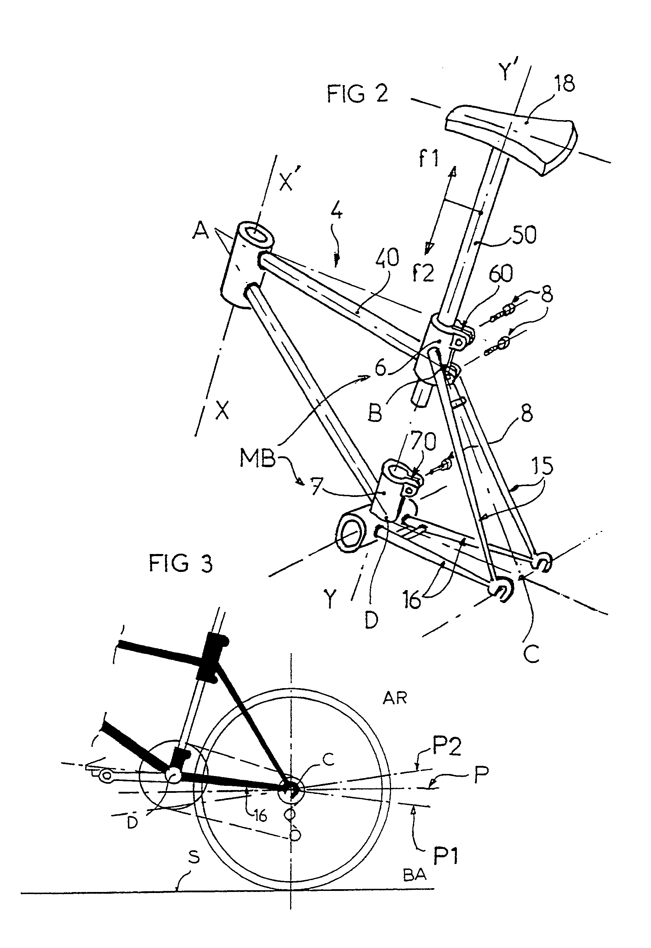

Par ailleurs, la liaison DC, réalisée par la fourche de retenue (16) est horizontale selon le mode de réalisation de la figure 1, mais il peut en être autrement. En effet le plan (P) de la fourche (16) peut être incliné, vers le haut selon un plan (P2) ou vers le bas selon un plan (P1), comme cela est représenté à la figure 3.

Rajoutons aussi que les deux roues peuvent être de même matériau, ou de matériaux différents.

Bien entendu l'invention n'est pas limitée aux modes de réalisation décrits et représentés à titre d'exemples, mais elle comprend aussi tous les équivalents techniques ainsi que leurs combinaisons, et d'autres variantes sont également possibles sans pour autant sortir du cadre de l'invention.

## Revendications

1.  Bicyclette comprenant un ensemble avant de direction (11) articulé autour d'un axe (XX') sur un ensemble arrière porteur (12), ledit ensemble avant de direction (11) comprend à sa partie inférieure une roue avant (2), et à sa partie supérieure un guidon (9), tandis que ledit ensemble arrière porteur (12) comprend une selle (18) et une roue arrière (1) caractérisée en ce que la roue arrière (1) est motrice et est plus petite que la roue avant (2).

2.  Bicyclette selon la revendication 1 caractérisée en ce que le diamètre "D1" de la roue arrière (1) est compris entre 75 et 95% du diamètre "D2" de la roue avant (2).

3.  Bicyclette selon la revendication 2 caractérisée en ce que le diamètre "D1" de la roue arrière (1) est égale à 95% du diamètre "D2" de la roue avant (2).

4.  Bicyclette selon la revendication 2 ou 3, caractérisée en ce qu'elle comprend des moyens d'entraînement (17) constitués par un plateau manivelle (3) solidaire de manivelles (19) portant des pédales (11), ledit plateau manivelle (3) entraînant une chaîne continue (20), et étant monté pivotant sur le cadre (4) à son point inférieur médian (D).

5.  Bicyclette selon la revendication 4, caractérisée en ce que l'ensemble arrière porteur (12) est constitué par un cadre (4) ayant la forme générale d'un losange (ABCD) incliné vers l'arrière dont le segment supérieur (AB) constituant le tube supérieur (40) de cadre (4) s'étend vers l'arrière (AR) et vers le bas (BA) selon un angle aigu "a" par rapport à l'horizontale (h).

6.  Bicyclette selon l'une quelconque des revendications précédentes caractérisée en ce que la tige de selle (50) constitue la liaison entre les points médians inférieur (D) et supérieur (B) du cadre (4).

7.  Bicyclette selon la revendication 6 caractérisée en ce que le cadre comprend des moyens (MB) de réglage et de blocage de la tige de selle (50).

8.  Bicyclette selon la revendication 7 caractérisée en ce que les moyens de blocage et de réglage sont constitués par deux brides (6, 7) de fixation de la tige de selle (50), une bride inférieure (7) au point inférieur médian (D) du cadre (4) et une bride supérieure (6) au point supérieur médian (B) dudit cadre (4).

9.  Bicyclette selon l'une quelconque des revendications précédentes caractérisée en ce que l'axe du plateau manivelle est à une distance réduite "L2" de l'axe de la roue arrière (1).

10. Bicyclette selon l'une quelconque des revendications précédentes caractérisée en ce que le diamètre extérieur "D2" de la roue avant (2) est compris entre 670 et 680 millimètres et le diamètre extérieur "D1" de la roue arrière (1) est compris entre 620 et 640 millimètres et l'entraxe "L2" entre l'axe du palier manivelle (3) et la roue arrière (1) est compris entre 360 et 380 millimètres, tandis que la hauteur "H1" du palier manivelle (3) est compris entre 300 et 350 millimètres.

FIG 1

EP 0 432 064 A1

FIG 2

FIG 3

6

Office européen
des brevets

**RAPPORT DE RECHERCHE EUROPEENNE**

Numero de la demande

EP    90 42 0522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-142848 (FAMI S.R.L.)<br>* page 2, ligne 7 – page 2, ligne 13; revendication 4; figures 1-3 * | 1, 2, 4, 9 | B62K3/04<br>B62K17/00 |
| A | --- | 3, 5, 10 | |
| A | BE-A-511832 (L. VAN MALDEGHEM)<br>* figures * | 1, 4-8 | |
| A | --- | | |
| A | DE-U-8714301 (T.JUNGER)<br>* figures * | 1, 2,<br>4-6 | |
| A | --- | | |
| A | FR-A-2335393 (R.L.D.GRAMMATICO)<br>* le document en entier * | 1, 4-6 | |
| | ------ | | |

DOMAINES TECHNIQUES
RECHERCHES (Int. Cl.5)

B62K

Le présent rapport a été établi pour toutes les revendications

| Lieu de la recherche | Date d'achèvement de la recherche | Examinateur |
|---|---|---|
| LA HAYE | 12 MARS 1991 | FRANKS B.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théoric ou principe à la base de l'invention
E : document de brevet antérieur, mais publié à la date de dépôt ou après cette date
D : cité dans la demande
L : cité pour d'autres raisons

........................................................

& : membre de la même famille, document correspondant

EPO FORM 1503 03.82 (P0402)